# EUROPÄISCHE PATENTANMELDUNG

(11) **EP 2 829 652 A1**
(43) Veröffentlichungstag der Anmeldung: **28.01.2015**
(21) Anmeldenummer: 13177828.4
(22) Anmeldetag: 24.07.2013
(51) Int. Cl.: D06F 58/04

(54) **Dichtung für einen Wäschetrockner**

(71) Anmelder: Vereinigte Filzfabriken AG, 89537 Giengen (DE)
(72) Erfinder: Gentner, Xaver, 73450 Neresheim (DE)
(74) Vertreter: Schmid, Wolfgang

(57) **Zusammenfassung**

Die Erfindung betrifft eine Dichtung (1) für einen Wäschetrockner, die in ihrem eingebauten Zustand zwischen einem feststehenden Gehäuseteil (7) und der rotierenden Trommel (9) des Wäschetrockners angeordnet ist und eine elastische Schaumstoffschicht (2) sowie eine Filzschicht (3) aufweist, wobei zumindest an einem Abschnitt mindestens einer Seite der Dichtung (1) eine Folie (6) als Luftbarriere angebracht ist. Ferner betrifft die Erfindung ein Verfahren zum Aufbringen einer Folie (6) auf eine solche Dichtung (1).

## Beschreibung

Die Erfindung betrifft eine Dichtung für einen Wäschetrockner nach dem Oberbegriff des Anspruchs 1 und ein Verfahren zum Aufbringen einer Folie auf eine solche Dichtung nach dem Oberbegriff des Anspruchs 13.

Eine derartige Dichtung für einen Wäschetrockener nach dem Trommelprinzip ist aus der DE 31 32 737 A1 bekannt. Die Dichtung ist zwischen einem feststehenden Gehäuseteil und der rotierenden Trommel angeordnet und weist einen Schaumstoff als elastisches Element und einen Filz als Gleitelement auf. Die Dichtung hat jedoch den Nachteil, dass diese bei Beaufschlagung mit der Trocknungsluft eine gewisse Menge an Trocknungsluft hindurchlässt. Dieser Umstand erfordert einen erhöhten Aufwand an elektrischer Energie zur Trocknung der zu trocknenden Kleidung, da die entwichene Trocknungsluft immer wieder durch neue Trocknungsluft ersetzt werden muss, die zur Trocknung der zu trocknenden Kleidung erst entsprechend aufgeheizt werden muss.

Die vorliegende Erfindung stellt sich die Aufgabe, eine kostengünstig herstellbare Dichtung mit geringer Luftdurchlässigkeit für einen Wäschetrockner zu gestalten.

Diese Aufgabe wird durch die Dichtung und das Verfahren zur Herstellung der Dichtung mit den in den unabhängigen Ansprüchen aufgeführten Merkmalen gelöst. Die Unteransprüche betreffen vorteilhafte Varianten und Ausführungsformen der Erfindung.

Die erfindungsgemäße Dichtung für einen Wäschetrockner, die in ihrem eingebauten Zustand zwischen einem feststehenden Gehäuseteil und der rotierenden Trommel des Wäschetrockners angeordnet ist, weist eine elastische Schaumstoffschicht sowie eine Filzschicht auf. Dabei ist an zumindest einem Abschnitt mindestens einer Seite der Dichtung eine Folie als Luftbarriere angebracht. Aufgrund der durch die Folie gebildeten Luftbarriere geht keine Trocknungsluft verloren bzw. strömt keine Trocknungsluft ungenutzt an der Trommel vorbei in das Gerätegehäuse oder aus dem Gerätegehäuse, welche durch neue Trocknungsluft ersetzt werden müsste, wobei diese erst wieder auf mindestens 100° aufgeheizt werden müsste, damit das Wasser in der zu trocknenden Kleidung verdampfen kann. Dies hat zum Vorteil, dass die Verwendung der erfindungsgemäßen Dichtung mit der Folie als Luftbarriere die Energieeffizienz eines Trockners deutlich verbessert, da im Zuge der Energie-Effizienzklassen jede Trocknungsluft, die dem System verloren geht, die Energieeffizienz des Trockners verschlechtert. Ein weiterer Vorteil ist, dass ein mit der erfindungsgemäßen Dichtung ausgestalteter Wäschetrockner weniger elektrische Energie benötigt.

Die erfindungsgemäße Dichtung realisiert somit in Kombination eine Luftbarriere, eine Abnutzungsoberfläche mit einer guten Dichtwirkung und ein Federvermögen, wodurch die Dichtung eine lange Lebensdauer während der Abnutzung des Trockners erhält. Weiterhin ermöglicht die erfindungsgemäße Dichtung durch die elastische Schaumstoffschicht den Ausgleich von Herstel-lungstoleranzen. Vorteil der Schaumstoffschicht ist, dass mittels dieser die genannten Toleranzen ausgeglichen werden und eine sichere Anlage der Dichtung an den Bauteilen gewährleistet ist.

Die Dichtung ist einfacher, billiger und wesentlich wirksamer als bekannte Dichtungen.

In einer vorteilhaften Weiterbildung der Erfindung kann die Folie an der Schaumstoffschicht angebracht sein. Von Vorteil ist, dass somit ein elastisches Gesamtsystem von Dichtung und Luftbarriere realisiert ist. Zudem ist eine schnelle und kostengünstige Herstellung möglich.

In einer weiteren vorteilhaften Ausgestaltung kann die Folie an der Filzschicht angebracht sein. Dies verbessert die Eigenschaft der Luftbarriere und reduziert den erforderlichen Energieaufwand des Wäschetrockners nochmals.

Des Weiteren kann in einer vorteilhaften Weiterbildung die Schaumstoffschicht auf die Filzschicht aufkaschiert sein. Dies kann vorzugsweise durch Flammkaschieren erfolgen. Dadurch ist eine schnelle und kostengünstige Herstellung möglich.

Die Schaumstoffschicht kann eine Klebebeschichtung zur Befestigung an dem feststehenden Gehäuseteil aufweisen. Dadurch ist einerseits die Dichtung im Betrieb ausreichend fest mittels der Klebebeschichtung eingebaut, andererseits ist bei einem Austausch der Dichtung im Schadensfall oder bei Verschleiß ein schneller Austausch mittels der Klebebeschichtung als Befes-tigungsmittel ermöglicht.

In einer vorteilhaften Weiterbildung kann zwischen der Schaumstoffschicht und der Klebebeschichtung eine Primerschicht angeordnet sein. Die Primerschicht verbessert die Haftung der Klebebeschichtung auf der Schaumstoffschicht.

Die Primerschicht und/oder die Folie kann Polyurethan enthalten. Von Vorteil ist die sehr hohe Flexibilität bei ausreichender Materialstärke von Polyurethan. Ein weiterer Vorteil ist die hohe Temperaturbeständigkeit von Polyurethan, welche in einem Bereich zwischen 170°C und 180°C liegt. Für die in einem Wäschetrockner herrschenden Temperaturen ist die Verwendung von Po-lyurethan in Schaum- oder Folienform als Dichtungsmaterial hervorragend geeignet.

Die Folie kann außerdem mit der Dichtung verklebt sein, was eine sehr einfache Anbringung der Folie an der Dichtung ermöglicht. Beispielsweise kann die Folie hierzu eine Klebeschicht aufweisen.

Alternativ kann die Schaumstoffschicht und/oder die Filzschicht zumindest teilweise unter Ausbilden der Folie verhautet sein. Dadurch ist eine schnelle und kostengünstige Herstellung möglich.

In einer vorteilhaften Weiterbildung kann die Folie eine Dicke in einem Bereich von 25 - 50 µm aufweisen. Dadurch ist die Folie derart flexibel, dass diese die Schaumstoffschicht nicht blockiert, wodurch die Schaumstoffschicht und die Folie auch wieder in die ursprüngliche Lage zurückgehen können, wenn die Schaumstoffschicht entlastet ist. Im Einsatz dient die Dichtung dazu, bei den auftretenden Toleranzen zwischen dem feststehenden Gehäuseteil und der rotierenden Trommel eine ausreichende Abdichtung zu gewährleisten. Durch die flexible Folie kann die Dichtung die Toleranzen somit weiterhin sicher ausgleichen.

In einer vorteilhaften Weiterbildung kann die Filzschicht von der Folie zu mindestens 50 % ihrer Dicke überdeckt werden. Damit ist eine optimale Gleiteigenschaft der Filzschicht und eine ausreichende Luftbarriere der Dichtung ermöglicht.

Die Schaumstoffschicht kann auch verschiedene Schaumstoffhärten aufweisen. Durch den Einsatz von unterschiedlichen Schaumstoffhärten kann die Luftundurchlässigkeit der Schaumstoffschicht verbessert werden.

In Anspruch 13 ist ein Verfahren zum Aufbringen einer Folie auf eine Dichtung angegeben. Durch dieses Verfahren ist eine einfache, schnelle und kostengünstige Herstellung möglich.

In einer vorteilhaften Weiterbildung kann die Dichtung mittels Führungen auf dem Transportband geführt werden, wobei die Dichtung mit der Filzschicht an einer ersten Führung und mit der Klebebeschichtung an der zweiten Führung anliegt. Von Vorteil ist, dass dadurch eine lagegerechte Führung der Dichtung ermöglicht wird. Zudem ist eine blasenfreie und genaue Aufbringung der Folie auf die streifenförmige Dichtung möglich.

Im Folgenden wird ein Ausführungsbeispiel der Erfindung anhand der Zeichnung näher erklärt. Es zeigen:
- Fig. 1: schematisch die Dichtung als Einzelheit;
- Fig. 2: schematisch die Dichtung in Einbaulage in einem Wäschetrockner;
- Fig. 3: schematisch ein Verfahren zur Herstellung der Dichtung; und
- Fig. 4: eine Draufsicht nach dem Pfeil IV aus Fig. 3.

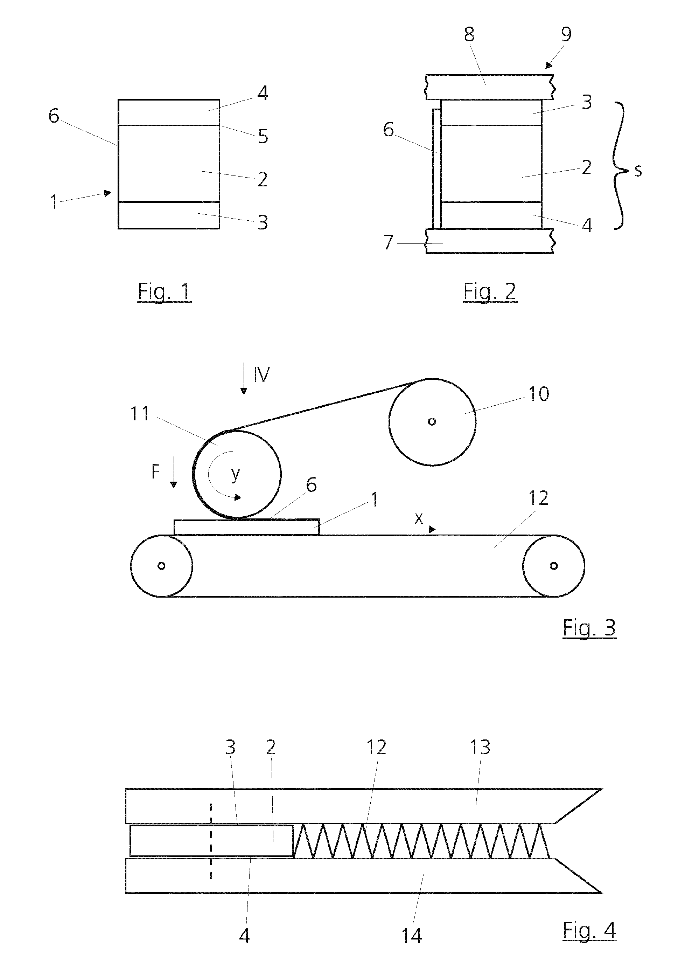

In Fig. 1 ist eine Dichtung 1 als Einzelheit schematisch dargestellt. Die Dichtung 1 wird vorzugsweise als streifenförmiges Element hergestellt und weist eine Schaumstoffschicht 2 sowie eine Filzschicht 3 auf. Die Schaumstoffschicht 2 kann als Trägermaterial für die Filzschicht 3 fungieren. Alternativ kann die Filzschicht 3 als Trägermaterial für die Schaumstoffschicht 2 fungieren. Die Filzschicht 3 ist vorzugsweise in einem mehrstufigen Nadelfilzverfahren hergestellt. Als Material für die Filzschicht 3 können Natur- und/oder Kunstfasern gewählt werden. Die Filzschicht 3 kann Polytetrafluorethylen (PTFE) enthalten. Mittels dem in die Filzschicht 3 ein- oder auf die Filzschicht 3 aufgebrachten PTFE können die Lebensdauer und die Gleiteigenschaften der Filzschicht 3 bzw. der Dichtung 1 erhöht werden.

Die Schaumstoffschicht 2 kann eine Dicke in einem Bereich zwischen 1,0 mm und 25 mm, vorzugsweise zwischen 5,0 mm und 20,0 mm, und weiter vorzugsweise zwischen 8,0 mm und 16,0 mm, aufweisen. Die Filzschicht 3 kann eine Dicke in einem Bereich zwischen 1,0 mm und 5 mm, vorzugsweise zwischen 2,0 mm und 3,0 mm, und weiter vorzugsweise zwischen 2,1 mm und 2,5 mm, aufweisen.

Die Schaumstoffschicht 2 weist im vorliegenden Fall an dem der Filzschicht 3 gegenüberliegenden Ende eine Klebebeschichtung 4 auf. Zwischen der Klebebeschichtung 4 und der Schaumstoffschicht 2 ist eine Primerschicht 5 angeordnet, die die Verbindung der Klebebeschichtung 4 mit der Schaumstoffschicht 2 verbessert. An einer freien Seite der Schaumstoffschicht 2 ist eine Folie 6 als Luftbarriere für Trocknungsluft angeordnet. Die Schaumstoffschicht 2, die Primerschicht 5 und/oder die Folie 6 können Polyurethan enthalten.

Fig. 2 zeigt schematisch einen Ausschnitt der Dichtung 1 in Einbaulage in einem nicht näher dargestellten Wäschetrockner. Die Dichtung 1 ist in einem Spaltbereich S zwischen einem feststehenden Gehäuseteil 7 und einem koaxial dazu angeordneten Trommelhals 8 einer rotierenden Trommel 9 des Wäschetrockners angeordnet. Die Dichtung 1 wird derart auf dem feststehenden Gehäuseteil 7 mittels der Klebebeschichtung 4 montiert bzw. geklebt, dass sie mit der Schaumstoffschicht 2 am feststehenden Gehäuseteil 7 aufliegt. Durch die Elastizität der Schaumstoffschicht 2 kommt die Filzschicht 3 unter Vorspannung an dem rotierenden Trommelhals 8 zur Anlage. Bei der Montage wird die Dichtung 1 um 3 bis 4 mm zusammengedrückt, so dass der Trommelhals 8 sicher an der Filzschicht 3 anliegt. Die Folie 6 bildet eine Luftbarriere oder Dampfsperre für die Trocknungsluft und erstreckt sich im vorliegenden Fall zumindest teilweise an mindestens einer Seite der Dichtung 1 zwischen dem feststehenden Gehäuseteil 7 und der Trommel 9.

Die Folie 6 kann in nicht näher dargestellter Weise zwischen dem feststehenden Gehäuseteil 7 und der Schaumstoffschicht 2 und/oder zwischen der Schaumstoffschicht 2 und der Filzschicht 3 und/oder zwischen der Trommel 9 und der Filzschicht 3 zumindest teilweise aufgebracht sein. Dies verbessert die Eigenschaft der Luftbarriere und reduziert den erforderlichen Energieaufwand des Wäschetrockners nochmals.

Das feststehende Gehäuseteil 7 kann eine Türe, eine Frontwand oder eine Rückwand sein, so dass die Dichtung 1 an einem vorderen oder hinteren Bereich der Trommel 9 eingesetzt werden kann. Die Dichtung 1 wird vor der Montage in nicht näher dargestellter Weise zusammengenäht, sodass aus der länglichen Dichtung 1 eine runde, endlose Dichtung 1 entsteht.

Bei einem handelsüblichen Trockner ist die vorzugsweise aus Stahlblech gefertigte Trommel 9 nicht immer genau rund, d. h. die Trommel 9 weist Toleranzen im Durchmesser auf. Somit wandert die Dichtung 1 auf dem Trommelhals 8 bzw. der Trommel 9 stets um einen gewissen Betrag. Die Trommel 9 ist auch in der Länge nicht exakt gleich, d. h. sie kann auch einen kleinen axialen Schlag haben. Mittels der Schaumstoffschicht 2 können diese Toleranzen ausgeglichen werden und eine sichere Anlage der Dichtung 1 an den Bauteilen ist gewährleistet.

Zur Herstellung der Dichtung 1 wird gemäß einem bevorzugten, in den Figuren nicht dargestellten Verfahren zuerst die Filzschicht 3 produziert und als Endlosmaterial aufgerollt. Anschließend wird in einem zweiten Verfahrensschritt unter Abrollen PTFE auf die Filzschicht 3 aufgetragen und die Filzschicht 3 wird wieder als Endlosmaterial aufgerollt. Aus Gewichtsgründen kann ein Ablängen der Filzschicht 3 erfolgen. In einem dritten Verfahrensschritt wird die Filzschicht 3 abgerollt und mit einem Schaum flammkaschiert, so dass die Schaumstoffschicht 2 auf der Filzschicht 3 fest aufgebracht ist. Dieses Halbzeug bzw. Material wird dann abgelängt und anschließend aufgerollt.

In einem vierten Verfahrensschritt wird die Klebebeschichtung 4 auf das Material aufgetragen. Das Material wird nicht mehr aufgerollt, da mit der Klebebeschichtung 4 eine Schutzfolie aufgebracht wird, welche sich unter dem Aufrollen von der Klebebeschichtung 4 zumindest teilweise ablösen würde. Das Ablösen der Schutzfolie hätte zur Folge, dass bei der Weiterverarbeitung zu einzelnen Streifen diese zusammenkleben oder der Kleber Luft ziehen und dann teilweise in der Schaumstoffschicht 2 versacken könnte, sodass partiell Stellen entstehen könnten, die schlechtere Klebeeigenschaften aufweisen. Eine Beaufschlagung oder Verunreinigung mit Staub oder sonstigen Dingen könnte durch die teilweise abgelöste Schutzfolie ebenfalls erfolgen.

Um das Ablösen der Schutzfolie zu vermeiden, verweilt das Material nach dem Klebebeschichten in Form einer Tafel. Die Tafel wird mit einer solchen Länge hergestellt, die später die fertige Dichtung 1 aufweisen soll. Im vorliegenden Ausführungsbeispiel ist die Tafel 1,60 m lang. Im vorletzten Verfahrensschritt wird die Tafel in Streifen geschnitten. Die Tafel ist beispielsweise 1,60 m lang und 1,70 m breit. Bei einer Streifenbreite von 13 mm können 130 solcher streifenförmiger Dichtungen 1 erzeugt werden. Die Dichtung 1 kann eine Breite in einem Bereich zwischen 5,0 mm und 40,0 mm, vorzugsweise zwischen 11,0 mm und 20,0 mm, aufweisen.

Die Figuren 3 und 4 zeigen schematisch einen Verfahrensschritt zur Herstellung der Dichtung 1.

In einem den oben beschriebenen Verfahrensschritten nachfolgenden, letzten Verfahrensschritt wird die Folie 6 eben auf die streifenförmige Dichtung 1 aufgebracht. Dazu wird die auf einer Rolle 10 aufgewickelte Folie 6 von derselben abgewickelt und mittels einer auf die Dichtung 1 wirkenden, rotierenden Andruckrolle 11, um welche die Folie 6 um einen gewissen Umschlingungswinkel, mit einer Kraft F, angedeutet mit einem Pfeil, auf die Dichtung 1 gedrückt. Vorzugsweise ist die Folie 6 mit einem Klebemittel versehen, um mit der Dichtung 1 verklebt zu werden. Zum Aufbringen der Folie 6 auf die Dichtung 1 wird die Dichtung 1 von einer im vorliegenden Fall als Transportband 12 ausgebildeten Transporteinrichtung entlang der Andruckrolle 11 in einer Richtung x, angedeutet mit einem Pfeil, befördert. Die Andruckrolle 11, mit der die Folie 6 umgelenkt wird, dreht sich in einer ebenfalls mit einem Pfeil angedeuteten Richtung y. Alternativ zu dem oben beschriebenen Verkleben kann die Schaumstoffschicht und/oder die Filzschicht zumindest teilweise unter Ausbilden der Folie verhautet sein.

Fig. 4 zeigt schematisch, dass die Dichtung 1 mittels Führungen 13, 14 auf dem Transportband 12 geführt ist. Dabei liegt die Dichtung 1 mit der Filzschicht 3 an einer ersten Führung 13 und mit der Klebebeschichtung 4 bzw. deren Schutzfolie an der zweiten Führung 14 an. Die Führungen 13, 14 weisen Einlaufschrägen zum Einführen der Dichtung 1 auf. Das Transportband 12 kann in nicht näher dargestellter Weise, mittels einer Antriebseinrichtung angetrieben sein. Im Prinzip erfährt die Dichtung 1 einen Vorschub in die Richtung x, wobei die sich mit der Dichtung 1 in Eingriff befindende Andruckrolle 11 durch den Vorschub des Transportbandes 12 dreht und die Folie 6 von der Rolle 10 und der Andruckrolle 11 abgewickelt wird. Die Folie 6 kann bei Erreichen des Endes der streifenförmigen Dichtung 1 mittels einer nicht dargestellten Scheideeinrichtung abgeschnitten werden.

## Patentansprüche

1. Dichtung (1) für einen Wäschetrockner, wobei die Dichtung (1) in ihrem eingebauten Zustand zwischen einem feststehenden Gehäuseteil (7) und einer rotierenden Trommel (9) des Wäschetrockners angeordnet ist und eine elastische Schaumstoffschicht (2) sowie eine Filzschicht (3) aufweist,
**dadurch gekennzeichnet, dass** an zumindest einem Abschnitt mindestens einer Seite der Dichtung (1) eine Folie (6) als Luftbarriere angebracht ist.

2. Dichtung (1) nach Anspruch 1,
**dadurch gekennzeichnet, dass** die Folie (6) an der Schaumstoffschicht (2) angebracht ist.

3. Dichtung (1) nach Anspruch 1 oder 2,
**dadurch gekennzeichnet, dass** die Folie (6) an der Filzschicht (3) angebracht ist.

4. Dichtung (1) nach einem der Ansprüche 1 bis 3,
**dadurch gekennzeichnet, dass** die Schaumstoffschicht (2) auf die Filzschicht (3) aufkaschiert, vorzugsweise flammkaschiert, ist.

5. Dichtung (1) nach einem der Ansprüche 1 bis 4,
**dadurch gekennzeichnet, dass** die Schaumstoffschicht (2) eine Klebebeschichtung (4) zur Befestigung an dem feststehenden Gehäuseteil (7) aufweist.

6. Dichtung (1) nach Anspruch 5,
**dadurch gekennzeichnet, dass** zwischen der Schaumstoffschicht (2) und der Klebebeschichtung (4) eine Primerschicht (5) angeordnet ist.

7. Dichtung (1) nach Anspruch 6,
**dadurch gekennzeichnet, dass** die Primerschicht (5) Polyurethan enthält.

8. Dichtung (1) nach einem der Ansprüche 1 bis 7,
**dadurch gekennzeichnet, dass** die Folie (6) Polyurethan enthält.

9. Dichtung (1) nach einem der Ansprüche 1 bis 8,
**dadurch gekennzeichnet, dass** die Folie (6) mit der Dichtung (1) verklebt ist.

10. Dichtung (1) nach einem der Ansprüche 1 bis 8,
**dadurch gekennzeichnet, dass** die Schaumstoffschicht (2) und/oder die Filzschicht (3) zumindest teilweise unter Ausbilden der Folie (6) verhautet ist.

11. Dichtung nach einem der Ansprüche 1 bis 11,
**dadurch gekennzeichnet, dass** die Folie (6) eine Dicke in einem Bereich von 25 - 50 µm aufweist.

12. Dichtung nach einem der Ansprüche 1 bis 13,
**dadurch gekennzeichnet, dass** die Filzschicht (3) von der Folie (6) zu mindestens 50 % ihrer Dicke überdeckt ist.

13. Verfahren zum Aufbringen einer Folie (6) auf eine Dichtung (1) nach einem der vorhergehenden Ansprüche,
**dadurch gekennzeichnet, dass** die Dichtung (1) durch den Vorschub einer Transporteinrichtung (12) zu einer Andruckrolle (11) befördert wird, wobei die auf die Dichtung (1) wirkende Andruckrolle (11) gedreht und die um die Andruckrolle (11) verlaufende Folie (6) mittels der Andruckrolle (11) auf die Dichtung (1) aufgebracht wird.

14. Verfahren nach Anspruch 13,
**dadurch gekennzeichnet, dass** die Dichtung (1) mittels Führungen (13, 14) auf der Transporteinrichtung (12) geführt wird, wobei die Dichtung (1) mit der Filzschicht (3) an einer ersten Führung (13) und mit der Klebebeschichtung (4) an der zweiten Führung (14) anliegt.
